# EUROPEAN PATENT SPECIFICATION

(11) **EP 2 227 406 B1**
(45) Date of publication and mention of the grant of the patent: **18.03.2015**
(21) Application number: 07852161.4
(22) Date of filing: 12.11.2007
(51) Int. Cl.: B60R 21/0134, G06K 9/00, G08G 1/16

(54) **A VEHICLE SAFETY SYSTEM**
FAHRZEUGSICHERHEITSSYSTEM
SYSTÈME DE SÉCURITÉ POUR VÉHICULE

(43) Date of publication of application: 15.09.2010
(73) Proprietor: Autoliv Development AB, 447 83 Vårgårda (SE)
(72) Inventor: LUNDMARK, Astrid, S-58750 Linköping (SE)
(74) Representative: Beattie, Alex Thomas Stewart
(86) International application number: PCT/SE2007/050838
(87) International publication number: WO 2009/064227

(56) References cited:
- JP-A- 11 166 811
- JP-A- 11 328 364
- JP-A- 2003 294 855
- JP-A- 2007 251 257
- US-A- 5 805 718
- US-A1- 2003 138 133
- US-A1- 2007 154 068
- ANDREA SCHEIDIG ET AL: "Generating Persons Movement Trajectories on a Mobile Robot", ROBOT AND HUMAN INTERACTIVE COMMUNICATION, 2006. ROMAN 2006. THE 15TH IEEE INTERNATIONAL SYMPOSIUM ON, IEEE, PI, 6 September 2006 (2006-09-06), pages 747-752, XP031049773, ISBN: 978-1-4244-0564-0
- HICHEUR H ET AL: "How do humans turn? head and body movements for the steering of locomotion", HUMANOID ROBOTS, 2005 5TH IEEE-RAS INTERNATIONAL CONFERENCE ON DEC. 5, 2005, PISCATAWAY, NJ, USA,IEEE, 5 December 2005 (2005-12-05), pages 265-270, XP010880409, DOI: 10.1109/ICHR.2005.1573578 ISBN: 978-0-7803-9320-2

## Description

THIS INVENTION relates to a vehicle safety system, and in particular concerns a system for detecting, and determining the distance to, objects around a vehicle.

When using vehicle-mounted cameras, particularly "mono" cameras, it is a challenge to determine accurately the distance from the vehicle to an object that has been detected by a camera. From a single frame image from a mono camera, the angular position and the angular size of an object (i.e. the amount of the image which is taken up by the object) can readily be determined. If the real size of the object is known, then the distance of the object can be accurately calculated. Unfortunately, in most cases the real size of the object will not be known.

If the object appears to be a human, an approximate determination of the distance to the object can be determined by assuming the size of the human. For instance, it may be assumed that the object is the same height as an average adult. The detected shape of the human may alternatively be compared against a number of templates, to see whether the human appears to fall into a particular category (for instance, toddler, younger child, older child, adult). If the human appears to fall into one of these categories, the height of the human may be assumed more accurately, and hence the distance to the human may be determined more accurately.

It will be appreciated, however, that this approach is prone to certain errors. For instance, parts of the body of the human may well be occluded, and if the lower part of an adult's body is occluded then the height of the adult will be under-estimated. If this is the case, then it may be determined that the human is further away from the vehicle than is really the case, and so action may be taken too late.

If the distance between the vehicle and an object can be determined accurately, then a decision can be made reliably as to whether any action has to be taken. For instance, a warning could be given to the driver that the speed of the vehicle must be reduced, emergency braking of the vehicle may be applied in an attempt to bring the vehicle to a halt before the vehicle strikes the object, or a pedestrian safety system such as a hood lifter may be activated.

However, if the distance of the object is not calculated correctly, distracting warnings may be activated needlessly, emergency braking or a hood lifter may be activated unnecessarily, which can be dangerous for the driver and other road users, or indeed a vehicle may be involved in an accident without adequate warning having been given, or preventative measures having been taken.

It is an object of the present invention to seek to provide an improved vehicle safety system of this type.

Accordingly, one aspect of the present invention provides a vehicle safety system, comprising: an image capture device to capture image data of an object in the vicinity of the vehicle; and environment. A clothing amount calculating section obtains a position and an area of the human being in the real space, a surface temperature of the clothes on the human being, a skin temperature of the human being, an environmental temperature and so forth based on information from the image processing section and information from the radiation sensor, and calculates the clothing amount of the human being from the obtained values.

The 2005 paper entitled "How do Humans Turn? Head and Body Movements for the Steering of Locomotion" discusses how the head and body of a human deviate from the straightforward direction during straight walking and turning.

US2003/138133 discloses a device for monitoring around a vehicle capable of detecting objects present around the vehicle based on an image captured by at least one infrared camera member provided with the vehicle. The device includes a binary object extraction unit which subjects a gray scale image of the image captured by the infrared camera member to a binary thresholding method, and extracts a binary object from the gray scale image; a gray scale object extraction unit which extracts a gray scale object, a range of the gray scale object including the binary object, from the gray scale image based on change in luminance of the gray scale image, and a pedestrian determination unit which sets a search area in an area including the gray scale object, and recognizes a pedestrian in the gray scale image based on a luminance dispersion in the search area.

It is an object of the present invention to seek to provide an improved vehicle safety system of this type.

Accordingly, one aspect of the present invention provides a vehicle safety system, comprising: an image capture device to capture image data of an object in the vicinity of the vehicle; and a processor operable to: analyse the image data to identify an object which is likely to be a human; identify the head of the human; and from the apparent size of the head of the human, determine a probable distance to the object, wherein the size of the head is assumed to be a standard size, wherein the pose of the human is analysed to determine the orientation of the head with respect to the vehicle.

Advantageously, the apparent width of the head is used to determine the probable distance to the object.

Preferably, the height of the head is used to determine the probable distance to the object.

Conveniently, the height and the width of the head are used to determine a radius of the head, which is used to determine a probable distance to the object.

Conveniently, the apparent size of other parts of the human are not taken into account in determining the probable distance from the vehicle to the object.

Alternatively, the apparent size of further parts of the body of the human are used as supplemental information, with the apparent size of the head being the primary source of information.

Advantageously, an output is generated if it is determined that a hazardous situation may arise.

Preferably, the output is a warning output, to cause a warning to be provided to a driver of the vehicle.

Conveniently, the output is a control output, to cause one or more active vehicle control systems to be activated.

Advantageously, the active vehicle control systems comprise active braking or active steering.

Preferably, the output signal is a pedestrian protection signal, causing the activation of one or more pedestrian protection systems of the vehicle.

Another aspect of the present invention provides a method for determining the distance from a vehicle to an object, the method comprising: capturing image data of an object in the vicinity of the vehicle; analysing the image data to determine that the object is likely to be a human; identifying the head of the human; analysing the pose of the human to determine the orientation of the head with respect to the vehicle; and from the apparent size of the head of the human, determining a probable distance from the vehicle to the object, wherein the size of the head is assumed to be a standard size.

A further aspect of the present invention provides a computer program comprising computer program code adaptor to cause all of the above steps to occur when the program is run on a computer.

Another aspect of the present invention provides a computer program according to the above, embodied on a computer readable medium.

In order that the present invention may be more readily understood, embodiments thereof will now be described, by way of example, with reference to the accompanying drawings, in which:
Figure 1 is a schematic view of an adult and a child as appearing in an image captured by an on-board vehicle camera; and
Figure 2 is a schematic image of an adult, the lower part of the adult's body being occluded by another object.

As is known in modern vehicles, a camera may be mounted on or in the vehicle, and arranged so that the field of view of the camera points generally forwardly of the vehicle. The camera may be adapted to detect light in optical frequencies, or alternatively may detect other radiation, for instance infrared radiation. The camera may be a mono camera.

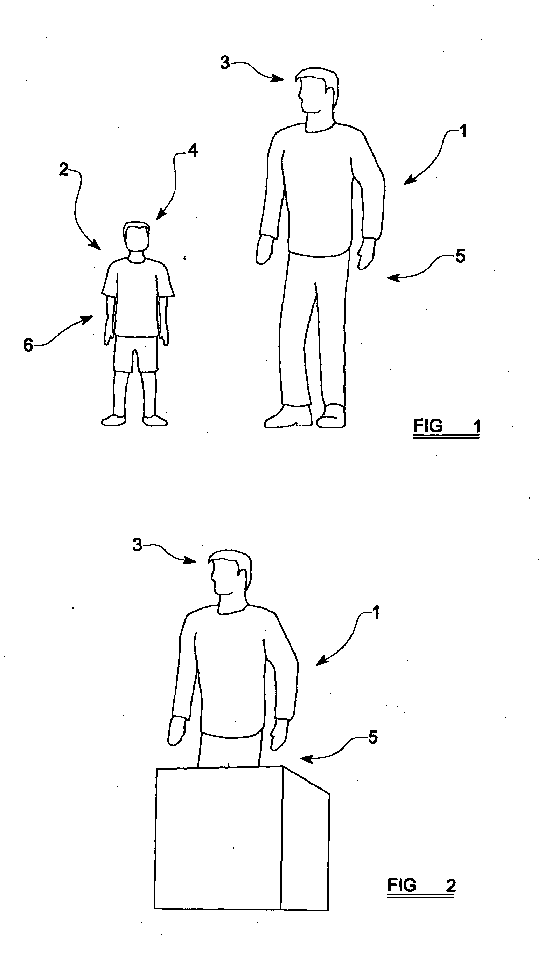

Figure 1 shows outlines of objects appearing in an image taken by an on-board vehicle camera (i.e. a single frame). In the frame, an adult human 1 appears, as well as a child 2. The adult 1 and child 2 can readily be identified as being likely to be human by an on-board processor of the vehicle, as a result of their shapes (as discussed above, their shapes may be compared with a number of templates to make this determination). For both the child 1 and the adult 2, the on-board processor is able to identify a head portion 3,4 and a body portion 5,6.

Once the on-board processor has identified the objects as being human, and it has been determined that the objects 1,2 are in the path of the vehicle, a determination must be made as to the distance from the vehicle to the objects 1,2. As will be understood from the above, this is important if safety measures are to be implemented to avoid, or mitigate the results of, a collision between the vehicle and the objects 1,2.

From the image, only the apparent size of each object 1,2 can be determined. In order to relate this apparent size to an actual distance between the vehicle and the object 1,2, the actual size of the objects must be known. As discussed above, with objects that are determined to be human, this can be done by assuming that the objects 1,2 are of a "standard" size. Clearly, however, there is a wide variety in actual sizes between humans, and particularly between adults and children. Therefore, before assuming that a human is of a standard size, it is necessary to establish what "type" of human is represented in the image, so that the standard size for that type of human can be retrieved from a memory and used in the calculation. It will be appreciated that this will require a considerable amount of processing, which may delay the activation of any safety systems.

It may also be the case that the lower part of a human's body is occluded, as, for example, is shown in figure 2. If this is the case, then the overall height of the human may appear to be less than the actual height, which may lead to a determination that the human is further away from the vehicle than is really the case. As discussed above, this may be dangerous, as safety measures may be activated too late, or not at all.

The size of individuals' heads is, however, relatively uniform. This is the case between adults of various sizes, and also between adults and children - an adult might typically be 2.4 times taller than a one year old child, but the diameter of the head of an adult is typically only 1.2 times bigger than that of a one year old child.

In addition, it is unlikely that the head of a person will be occluded in an image, and thus information regarding the apparent size of the head of a human will almost always be available.

In accordance with embodiments of the invention, therefore, the apparent size of the head 3,4 of a human 1,2 detected in an image gathered by an on-board vehicle camera is used to determined the distance from the vehicle to the human 1,2. A head is assumed to be of a standard size to allow this distance to be calculated.

In preferred embodiments, only the size of the head is considered, and the apparent size of other parts of the human in the image are disregarded. In another embodiment, the size of the head is the primary source of information and, if further parts of the human's body are visible in an image, measurements of one or more of these parts may be used as supplemental information.

The width of human heads is the dimension that varies the least between humans, but this is only case if the head is seen front-on (i.e. not from the side). While the height of human heads varies to a greater degree, the height of a human head is the same if viewed from the front or from the side. Either the width or the height of the head may be used, or information relating to both may be considered. The pose of the human is considered to assist in determining whether the human is oriented side-on or head-on to the camera. To do so, the shape of the human in the image may be compared against a number of template shapes. If it is determined that the head is likely to be substantially face-on in the image, the width of the head may be used, whereas if the head is likely to be substantially side-on then the height of the head may be used.

In still further embodiments, the radius or average radius of the head, as it appears in the image, may be used.

It will be understood that the head size can be estimated from an image using known image processing techniques. Unless the resolution of the on-board vehicle camera is very high, or the human is very close, it is envisaged that sub-pixel accuracy will be required in order to determine the apparent size of the head with sufficient precision. A skilled person will understand how this may be achieved.

The processor of the vehicle is also operable to make a determination as to whether any vehicle systems should be activated in response to the most probable distance from the vehicle to the object.

For instance, if it appears that the driver will soon need to reduce the speed of the vehicle in order to avoid a collision with the object, or another potentially hazardous situation, a warning may be provided to the driver. The warning may take the form of a visual, audible or haptic alert, or any combination of these.

Alternatively, if it appears that action must be taken very swiftly in order to avoid a collision, active braking and/or steering systems may be activated in order to bring the vehicle to a halt, or to divert the course of the vehicle, and hopefully avoid a collision with the object.

Further, if it appears that a collision with the object is unavoidable, then one or more vehicle safety systems may be activated. These safety systems may operate to the benefit of the vehicle occupants, for instance, air-bags or seatbelt pretensioners. They may also act for the benefit of pedestrians or cyclists, and for instance may comprise a bonnet lifter to lessen the likely harm of the impact.

It will be appreciated that using the size of heads of humans identified in images captured by on-board vehicle cameras will allow a robust and accurate calculation of the distance of the vehicle from the human, and that as a result activation of vehicle safety systems at an appropriate time is more likely to occur.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A vehicle safety system, comprising:
an image capture device to capture image data of an object in the vicinity of the vehicle; and
a processor operable to:
analyse the image data to identify an object which is likely to be a human (1);
identify the head (3) of the human (1); and
from the apparent size of the head (3) of the human (1) **in the image,** determine a probable distance to the object, wherein the **actual** size of the head (3) is assumed to be **of** a standard size,
**wherein the pose of the human (1) is considered to assist in determining whether the human (1) is oriented side-on or head-on to the camera, in order to determine said apparent size of the head (3) of the human (1).**

2. A system according to claim 1, wherein the apparent width of the head (3) is used to determine the probable distance to the object.

3. A system according to claim 1 or 2, wherein the height of the head (3) is used to determine the probable distance to the object.

4. A system according to any preceding claim, wherein the height and the width of the head (3) are used to determine a radius of the head (3), which is used to determine a probable distance to the object.

5. A system according to any preceding claim, wherein the apparent size of other parts of the human (1) are not taken into account in determining the probable distance from the vehicle to the object.

6. A system according to any one of claims 1 to 4, wherein the apparent size of further parts of the body (5) of the human (1) are used as supplemental information, with the apparent size of the head (3) being the primary source of information.

7. A system according to any preceding claim, in which an output is generated if it is determined that a hazardous situation may arise.

8. A system according to claim 7, wherein the output is a warning output, to cause a warning to be provided to a driver of the vehicle.

9. A system according to claim 7 or 8, in which the output is a control output, to cause one or more active vehicle control systems to be activated.

10. A system according to claim 9, wherein the active vehicle control systems comprise active braking or active steering.

11. A system according to any one of claims 8 to 10, wherein the output signal is a pedestrian protection signal, causing the activation of one or more pedestrian protection systems of the vehicle.

12. A method for determining the distance from a vehicle to an object, the method comprising:
capturing image data of an object in the vicinity of the vehicle;
analysing the image data to determine that the object is likely to be a human (1);
identifying the head (3) of the human (1); and
from the apparent size of the head (3) of the human (1) **in the image,** determining a probable distance from the vehicle to the object, wherein the **actual** size of the head (3) is assumed to be **of** a standard size,
**wherein the pose of the human (1) is considered to assist in determining whether the human (1) is oriented side-on or head-on to the camera, in order to determine said apparent size of the head (3) of the human (1).**

13. A computer program product comprising computer program code adapted to cause all of the steps of claim 12 to occur when the program is run on a computer.

14. A computer program product according to claim 13, embodied on a computer readable medium.

## Patentansprüche

1. Fahrzeugsicherheitssystem, umfassend:
eine Bilderfassungsvorrichtung zum Erfassen von Bilddaten von einem Objekt in der Nähe des Fahrzeugs, und
einen Prozessor, der so funktionsfähig ist, dass er:
die Bilddaten so analysiert, dass er ein Objekt erkennt, bei dem es sich wahrscheinlich um einen Menschen (1) handelt;
den Kopf (3) des Menschen (1) erkennt; und
aus der scheinbaren Größe des Kopfs (3) des Menschen (1) in dem Bild einen wahrscheinlichen Abstand zu dem Objekt bestimmt, wobei angenommen wird, dass die tatsächliche Größe des Kopfs (3) eine Standardgröße ist,
wobei die Haltung des Menschen (1) unterstützend bei der Ermittlung berücksichtigt wird, ob der Mensch (1) zu der Kamera seitlich oder frontal ausgerichtet ist, damit die scheinbare Größe des Kopfs (3) des Menschen (1) bestimmt wird.

2. System nach Anspruch 1, wobei die scheinbare Breite des Kopfs (3) zum Bestimmen des wahrscheinlichen Abstands zu dem Objekt verwendet wird.

3. System nach Anspruch 1 oder 2, wobei die Höhe des Kopfs (3) zum Bestimmen des wahrscheinlichen Abstands zu dem Objekt verwendet wird.

4. System nach einem vorhergehenden Anspruch, wobei die Höhe und die Breite des Kopfs (3) zum Bestimmen eines Radius des Kopfs (3) verwendet werden, der zum Bestimmen des wahrscheinlichen Abstands zu dem Objekt verwendet wird.

5. System nach einem vorhergehenden Anspruch, wobei die scheinbare Größe von anderen Teilen des Menschen (1) beim Bestimmen des wahrscheinlichen Abstands vom Fahrzeug zu dem Objekt nicht berücksichtigt wird.

6. System nach einem der Ansprüche 1 bis 4, wobei die scheinbare Größe weiterer Teile des Körpers (5) des Menschen (1) als Zusatzinformation verwendet wird, wobei die scheinbare Größe des Kopfs (3) die hauptsächliche Informationsquelle ist.

7. System nach einem vorhergehenden Anspruch, in dem eine Ausgabe erzeugt wird, wenn ermittelt wird, dass es zu einer gefährlichen Situation kommen kann.

8. System nach Anspruch 7, wobei es sich bei der Ausgabe um eine Wamausgabe handelt, damit bewirkt wird, dass ein Fahrer des Fahrzeugs eine Warnung erhält.

9. System nach Anspruch 7 oder 8, in dem es sich bei der Ausgabe um eine Steuerausgabe handelt, damit bewirkt wird, dass ein oder mehrere aktive Fahrzeugsteuerungssysteme aktiviert werden.

10. System nach Anspruch 9, wobei die aktiven Fahrzeugsteuerungssysteme aktives Bremsen oder eine Aktivlenkung umfassen.

11. System nach einem der Ansprüche 8 bis 10, wobei das Ausgangssignal ein Fußgängerschutzsignal ist, das die Aktivierung von einem oder mehreren Fußgängerschutzsystemen des Fahrzeugs bewirkt.

12. Verfahren zum Bestimmen des Abstands von einem Fahrzeug zu einem Objekt, wobei das Verfahren umfasst:
Erfassen von Bilddaten von einem Objekt in der Nähe des Fahrzeugs;
Analysieren der Bilddaten zum Bestimmen, dass es sich bei dem Objekt wahrscheinlich um einen Menschen (1) handelt;
Erkennen des Kopfs (3) des Menschen (1); und
aus der scheinbaren Größe des Kopfs (3) des Menschen (1) in dem Bild Bestimmen eines wahrscheinlichen Abstands von dem Fahrzeug zu dem Objekt, wobei angenommen wird, dass die tatsächliche Größe des Kopfs (3) eine Standardgröße ist,
wobei die Haltung des Menschen (1) unterstützend bei der Ermittlung berücksichtigt wird, ob der Mensch (1) zu der Kamera seitlich oder frontal ausgerichtet ist, damit die scheinbare Größe des Kopfs (3) des Menschen (1) bestimmt wird.

13. Computerprogrammprodukt mit Computerprogrammcode, das so ausgelegt ist, dass es bewirkt, dass sämtliche Schritte von Anspruch 12 erfolgen, wenn das Programm auf einem Computer ausgeführt wird.

14. Computerprogrammprodukt nach Anspruch 13, das auf einem computerlesbaren Medium verkörpert ist.

## Revendications

1. Système de sécurité pour véhicule, comprenant :
un dispositif de capture d'image destiné à acquérir des données d'image d'un objet à proximité du véhicule ; et
un processeur pouvant être exploité pour :
analyser les données d'image afin d'identifier un objet qui est susceptible d'être un humain (1) ;
identifier la tête (3) de l'humain (1) ; et
à partir de la taille apparente de la tête (3) de l'humain (1) dans l'image, déterminer une distance probable jusqu'à l'objet, la taille réelle de la tête (3) étant supposée être une taille standard,
la position de l'humain (1) étant considérée pour aider à déterminer si l'humain (1) est orienté de côté ou de face par rapport à la caméra, afin de déterminer ladite taille apparente de la tête (3) de l'humain (1).

2. Système selon la revendication 1, dans lequel la largeur apparente de la tête (3) est utilisée pour déterminer la distance probable jusqu'à l'objet.

3. Système selon la revendication 1 ou 2, dans lequel la hauteur de la tête (3) est utilisée pour déterminer la distance probable jusqu'à l'objet.

4. Système selon une quelconque revendication précédente, dans lequel la hauteur et la largeur de la tête (3) sont utilisées pour déterminer un rayon de la tête (3), qui est utilisé pour déterminer une distance probable jusqu'à l'objet.

5. Système selon une quelconque revendication précédente, dans lequel la taille apparente d'autres parties de l'humain (1) n'est pas prise en compte dans la détermination de la distance probable entre le véhicule et l'objet.

6. Système selon l'une quelconque des revendications 1 à 4, dans lequel la taille apparente d'autres parties du corps (5) de l'humain (1) est utilisée comme information supplémentaire, la taille apparente de la tête (3) étant la source primaire d'information.

7. Système selon une quelconque revendication précédente, dans lequel une sortie est générée s'il est déterminé qu'une situation dangereuse peut survenir.

8. Système selon la revendication 7, dans lequel la sortie est une sortie d'avertissement, pour provoquer la transmission d'un avertissement à un conducteur du véhicule.

9. Système selon la revendication 7 ou 8, dans lequel la sortie est une sortie de commande, pour provoquer l'activation d'un ou de plusieurs systèmes de commande actifs du véhicule.

10. Système selon la revendication 9, dans lequel les systèmes de commande actifs du véhicule comprennent un freinage actif ou une direction active.

11. Système selon l'une quelconque des revendications 8 à 10, dans lequel le signal de sortie est un signal de protection pour piéton, provoquant l'activation d'un ou de plusieurs systèmes de protection pour piéton du véhicule.

12. Procédé de détermination de la distance entre un véhicule et un objet, le procédé comprenant :
acquérir des données d'image d'un objet à proximité du véhicule ;
analyser les données d'image afin de déterminer que l'objet est susceptible d'être un humain (1) ;
identifier la tête (3) de l'humain (1) ; et
à partir de la taille apparente de la tête (3) de l'humain (1) dans l'image, déterminer une distance probable entre le véhicule et l'objet, la taille réelle de la tête (3) étant supposée être une taille standard,
la posture de l'humain (1) étant considérée pour aider à déterminer si l'humain (1) est orienté de côté ou de face par rapport à la caméra, afin de déterminer ladite taille apparente de la tête (3) de l'humain (1).

13. Produit programme informatique comprenant du code de programme informatique adapté pour faire se produire toutes les étapes de la revendication 12 quand le programme est exécuté sur un ordinateur.

14. Produit programme informatique selon la revendication 13, incorporé sur un support lisible par ordinateur.
